# EUROPÄISCHE PATENTANMELDUNG

(11) **EP 4 027 282 A1**
(43) Veröffentlichungstag der Anmeldung: **13.07.2022**
(21) Anmeldenummer: 21150961.7
(22) Anmeldetag: 11.01.2021
(51) Int. Cl.: G06Q 10/06, G06Q 10/10

(54) **VORRICHTUNG, SYSTEM UND VERFAHREN ZUR ZUGRIFFSBESCHRÄNKTEN BEREITSTELLUNG EINER ZEITABHÄNGIGEN BENUTZUNGS-KENNZAHL FÜR EIN GERÄT**

(71) Anmelder: Siemens Aktiengesellschaft, 80333 München (DE)
(72) Erfinder: Ermler, Rene, 91058 Erlangen (DE); Bölderl-Ermel, Wolfgang, 90530 Wendelstein (DE)

(57) **Zusammenfassung**

Die Erfindung betrifft ein Verfahren und eine entsprechende Vorrichtung zur Ermöglichung der Einführung von Pay-Per-Use Modellen bei der Vermietung von Komponenten im Automatisierungsgeschäft.

Die Herausforderung und der Erfolg bei der Einführung solcher Pay-Per-Use Modelle besteht vor allem darin, den Interessenkonflikt zwischen dem Schutz sensibler Produktionsdaten und der Notwendigkeit des Sammelns möglichst vieler dieser Produktionsdaten zur Verwendung als nutzungsrelevante Abrechnungsdaten angemessen zu adressieren.

Es wird also ein Verfahren vorgeschlagen, dass die verwendeten Daten sicher schützt und dennoch eine Möglichkeit bietet, bei strittigen Fragen die Daten zu jedem späteren Zeitpunkt zu rekonstruieren.

## Beschreibung

Traditionell werden Werkzeugmaschinen von den Herstellern der Maschinen an die Nutzer dieser Maschinen verkauft, die Anschaffung der Maschinen wird dabei üblicherweise über einen Kredit finanziert und innerhalb eines Zeitraums von beispielsweise 5 Jahren getilgt. Das macht in dem Rechenbeispiel pro Jahr 20 Prozent für den Unternehmer - zuzüglich zu den Zinsen. Für Unternehmen in volatilen Märkten kann die Abzahlung dabei schnell zu einer großen Belastung führen.

Ein neues Finanzierungsmodell "Pay per Use" gewinnt deshalb bei Herstellern in vielen Anwendungsgebieten an Bedeutung. Erstmals stehen auch genügend Echtzeit-Daten zur Verfügung, die Herstellern als Anbieter wie auch den Abnehmern unbestechliche Basisparameter für eine entsprechend genaue Abrechnung bieten.

Das Angebot bietet auch Fertigungsbetrieben viele Vorteile, sowohl wirtschaftlicher als auch technischer Art:
Der Betrieb kann dabei eine Werkzeugmaschine der aktuellen Generation benutzen, die im Wesentlichen nach Auslastung bezahlt wird und gegebenenfalls (beispielsweise bei leeren Auftragsbüchern) auch zurückgegeben werden kann. Der Kunde kann so immer mit der neuesten Gerätegeneration arbeiten, die in Bezug auf Ressourcenverbrauch den besten Nutzen bietet, und vermeidet eine langfristige Kapitalbindung durch Maschinen, die ungenutzt stehen bleiben. Die Bezahlung erfolgt transparent, meist im Rahmen einer monatlichen Abrechnung.

Zukünftige Kalkulationen und Angebote können auf Basis der tatsächlichen Minutenkosten erfolgen, welche auch direkt in die Stückkostenrechnung einfließen können. Nach Vertragsablauf (oder bei ausbleibenden Aufträgen) kann die Maschine zurückgegeben beziehungsweise in ein neues Modell getauscht werden.

Ein weiterer Vorteil für den Maschinen-Nutzer: in der Maschine kann einen Wartungsmanager integriert werden, der die Notwendigkeit maschinenbedingter Wartungen und Instandhaltungsmaßnahmen abhängig von der Nutzung feststellt und vorschlägt.

Durch diese Vernetzung und Digitalisierung werden die Nutzungsdaten von Maschinen transparenter:
Der Kunde zahlt nur für die Nutzlaufzeit der Maschine. Die Daten zur Nutzlaufzeit werden auf sicherem Weg in der Maschinensteuerung erfasst. Die dafür nötige IT-Infrastruktur kann beispielsweise über die Siemens IoT-Plattform "Mindsphere" geliefert werden. Für die Verbindung ins Internet wird beispielsweise zwischen Maschinensteuerung und Kundennetzwerk ein Industrie-PC, wie die Sinumerik Edge von Siemens, zwischengeschaltet.

Grundlegende Voraussetzung bei diesem Geschäftsmodell ist allerdings eine transparente und sichere Datenhaltung mit Informationen über Art und Umfang der tatsächlichen Nutzung der Maschine.

Eine große Herausforderung ist dabei, dass die verwendeten Daten nicht für Unbefugte zugreifbar oder später gar änderbar sein dürfen.

Es muss beispielsweise zu jedem Zeitpunkt gewährleistet sein, dass keine Direktverbindung vom Internet zur Maschine möglich ist und dass die Daten mit den höchsten Sicherheitszertifikaten verschlüsselt werden.

Mit der Zunahme von nutzungsbasierten Geschäftsmodellen im industriellen Bereich erwächst also die Notwendigkeit, nutzungsrelevante Daten aus Maschinen oder Anlagen beim Maschinenbesitzer zu sammeln und auch auszuwerten.

Diese Daten hängen nahe mit dem Produktionsprozess zusammen und beinhalten daher auch für den Kunden sicherheitskritische Daten, im Folgenden auch Kennzahlen genannt, wie (die Aufzählung ist nicht abschließend zu verstehen):
Produktionszeiten und -dauer,
Bearbeitungsgeschwindigkeit,
Bearbeitungs-Intensität,
Angewendete Kräfte, oder
Anzahl produzierter Teile.

Diese Daten lassen damit dem Unberechtigten (beispielsweise einem Konkurrenten) auch vielfältige Rückschlüsse auf Prozesse und Auslastung beim Maschinennutzers zu und damit auch ggf. auf seinen wirtschaftlichen Erfolg.

Die Herausforderung und der Erfolg bei der Einführung solcher Pay-Per-Use Modelle besteht also vor allem darin, den Interessenkonflikt zwischen dem Schutz sensibler Produktionsdaten und der Notwendigkeit des Sammelns möglichst vieler dieser Produktionsdaten zur Verwendung als nutzungsrelevante Abrechnungsdaten angemessen zu adressieren.

Einerseits sind Maschinendaten als Betriebsgeheimnis anzusehen, aus denen sich wertvolle Details über die Produkte und den Produktionsprozess ableiten lassen und die daher beispielsweise (z. B. im Rahmen von Wirtschaftsspionage) auch für konkurrierende Unternehmen interessant sind.

Andererseits kann im Falle einer Uneinigkeit über die korrekte Abrechnung der Rechnungssteller (Eigentümer) der Nachweispflicht dem Kunden (Nutzer) gegenüber nicht nachkommen, wenn er nicht über die dazu notwendigen Detaildaten verfügt.

Offensichtlich können nicht beide Interessen zugleich auf triviale Weise erfüllt werden.

Eine mögliche Lösung wäre die Speicherung aller Daten beim Rechnungssteller und Durchsetzung eines Zugriffsschutzes zu den Daten (z. B. Datenbankrechtemanagement).

Im hier behandelten Fall ist dies nur bedingt akzeptabel, da ein Zugriff auf den Datenbestand ohne Wissen des Nutzers nicht ausgeschlossen werden kann (auch durch Softwarebugs, Hacker, fehlerhafte Rechtevergabe, unsichere Passwörter). Weiterhin ist der Datenbankadministrator in der Regel Superuser und kann ohnehin immer auf die Daten zugreifen, was in dem Fall nicht gewünscht ist.

Es wäre auch denkbar, eine sehr frühe Verdichtung der Nutzungsdaten zu Kennzahlen (KPI, Key Performance Indicator) wie Gesamtbetriebszeit oder Nutzungsindizes / Nutzungsgrade durchzuführen. Ein bekanntes Beispiel für ein solches Vorgehen wäre ein "Smart Meter" (verplombter intelligenter Stromzähler). Das erfordert jedoch besonders gesicherte Geräte, die informationstechnisch und mechanisch manipulationssicher sind.

Eine weitere Möglichkeit, das Problem zu lösen, wäre die Verschlüsselung des Datenbestandes vor der Übertragung, wobei Herausgabe des Schlüssels möglich ist, und beispielsweise nur im Streitfall erfolgt. Dieses Vorgehen ist sehr sensibel, da nach Herausgabe des Schlüssels wegen einer strittigen Rechnung (und Generierung eines neuen für die Zukunft) auch alle älteren und zukünftigen Daten entschlüsselt werden könnten.

Es ist Aufgabe der Erfindung, ein Verfahren und eine Vorrichtung anzugeben welche die oben genannte Aufgabe, in einem aufgezeigten Szenario Nutzungsdaten zu sammeln und sicher aufzubewahren löst. Dabei sollen gleichzeitig die unten aufgezählten Kriterien erfüllt sein:
- Die Nutzbarkeit von Nutzungskennzahlen durch den Rechnungssteller muss ermöglich werden.
- Die Integrität und der Schutz aller sensibler Daten des Nutzers muss sichergestellt sein.
- Die Nachprüfbarkeit der Nutzungskennzahlen erfolgt durch den Rechnungssteller und Nutzer gemeinsam.
- Eine feingranulare Freigabe sensibler Daten durch den Nutzer im Streitfall (bei der Abrechnung) muss zu jedem Zeitpunkt möglich sein.

Die Aufgabe wird gelöst durch eine Vorrichtung welches die Merkmale des Patentanspruchs 1 realisiert.

Die Aufgabe wird weiterhin gelöst durch ein System gemäß den Merkmalen den Patentanspruchs 4 gelöst und durch ein Verfahren welches die Schritte gemäß den Merkmalen des Patentanspruchs 9 ausführt.

Die erfindungsgemäße Vorrichtung zur zugriffsbeschränkten Bereitstellung einer zeitabhängigen Benutzungs-Kennzahl für ein Gerät zur weiteren Verwendung eines ersten Nutzers, insbesondere als nutzungsabhängige Rechnungsgrundlage für einen zweiten Nutzer, weist
- einem Rechner zur Ermittlung der Benutzungs-Kennzahl aus einem ermittelten, nutzungsabhängigen, zeitabhängigen Messwert zu dem Gerät auf, wobei der Algorithmus zur Berechnung dem ersten Nutzer und den zweiten Nutzer bekannt sind,
- mit einem Schlüsselgenerator zur Erzeugung eines Schlüsselindex, und Generierung eines symmetrischen Schlüssels auf Basis des Schlüsselindex, zur Verschlüsselung des zumindest einen Messwertes mittels des symmetrischen Schlüssels und
- Übertragung der zeitabhängigen Benutzungs-Kennzahl zusammen mit dem verschlüsselten Messwert und dem Schlüsselindex in einem Datenpaket.

Die Erfindung wird im Weiteren auch durch die Figuren dargestellt, welche die Idee der Erfindung verdeutlichen sollen, aber für sich keine Einschränkung der Erfindung darstellen. Die Figuren zeigen im Einzelnen:
Figur 1 den Zusammenhang zwischen dem Geräte-Hersteller und dem Verwender der Geräte,
Figur 2 das Verfahren, wie es in Gerät 2 ausgeführt wird,
Figur 3 eine Darstellung der Verfahrensschritte in Gerät 1,
Figur 4 die Verfahrensschritte in Gerät 3
Figur 5 die Aufteilung der Daten D in Datenblöcke und
Figur 6 die Aufteilung eines einzelnen Datenblocks.

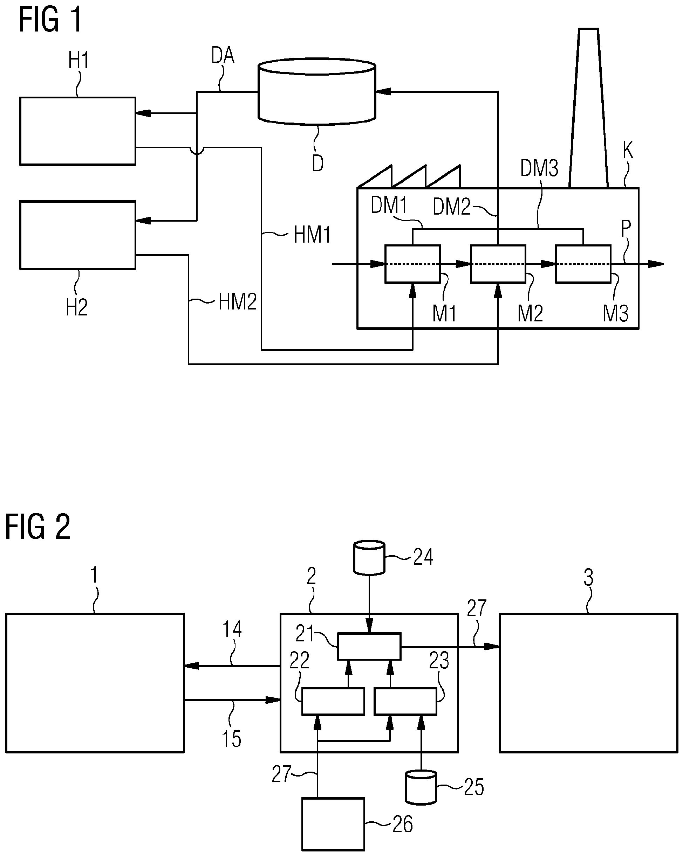

Die Figur 1 zeigt einen Überblick über die Ausgangssituation und die zu lösende Aufgabe. Ein Kunde K, beispielsweise ein Hersteller von bestimmten Gütern P beliebiger Art, benötigt für den Betrieb seines Werkes verschiedene Bearbeitungs-Geräte, insbesondere Werkzeugmaschinen M1, M2, M3. Diese werden von den Geräteherstellern H1, H2 produziert und dem Kunden K zur Verwendung in seinem Werk zur Verfügung gestellt.

Die Werkzeugmaschinen M1, M2, M3 werden von dem Kunden K dabei nicht gekauft, sondern auf Basis eines Pay-Per-Use Vertrages zur Verfügung gestellt. Dabei wird die Abrechnung der Benutzung auf Basis der von den Bearbeitungs-Geräten gesammelten Betriebs-Daten DM1, DM2, DM3 zur tatsächlichen Benutzung durchgeführt. Die Daten können in einer Datenbank D gespeichert werden, und die daraus des weiter unten beschriebenen Verfahrens sicher erzeugten Abrechnungsdaten DA werden an die Hersteller H1, H2 übermittelt. Es ist dabei wichtig, dass der Empfänger (und auch kein unberechtigter Dritter) die ursprünglichen Betriebsdaten üblicherweise aus den Abrechnungsdaten zurück ermitteln kann. Es soll aber dennoch jederzeit möglich sein, wenn ein zwingender Grund vorliegt, auch nachträglich, diese Daten zu extrahieren, zum Beispiel bei Unstimmigkeiten über die Höhe der Abrechnung zwischen Hersteller H1, H2 und Kunde K.

Vorgeschlagen wird ein System, welches aus drei Komponenten besteht:
Gerät 1, welches eine Folge von Schlüsseln erzeugt, mit denen sensible Daten verschlüsselt werden.

Gerät 2, welches die Daten erfasst, aus den, vom Sensor 26 ermittelten, sensiblen Messdaten 27 die nichtsensiblen Kennzahlen 23 bildet und im Anschluss die Kennzahlen 23 zusammen mit den durch Verschlüsselungsverfahren 22 verschlüsselten Messdaten an den Eigentümer sendet, 27. Eine Konfiguration in Gerät 2 legt fest, wie oft vom Gerät 1 ein neuer Schlüssel angefordert wird.

Gerät 3, wird ergänzend verwendet, um die Nutzungskennzahlen und die verschlüsselten Messdaten des Nutzers zu speichern.

Der Anbieter / Eigentümer des fraglichen Gerätes kann dem Nutzer Rechnungen stellen. Im Streitfall muss der Nutzer einen Zugriff auf fragliche Messdaten gewähren.

Figur 2 zeigt eine Übersicht über das Zusammenspiel zwischen den Geräten 1, 2 und 3, sowie eine Detailerklärung der Funktionsweise des Geräts 2.

Gerät 2 ist beispielsweise eine Automatisierungskomponente, die Messdaten 27 während des Betriebs beispielsweise mittels Sensoren 26 aus dem Produktionsprozeß aufnimmt und mit einem Algorithmus 23 zu einer Kennzahl verdichtet. Diese Messdaten umfassen Werte wie Laufzeit, oder -dauer, Intensität, (Energieverbrauch), produzierte Teile (pro Zeiteinheit), Geschwindigkeit, oder ähnliches.

Der Berechnungsalgorithmus soll nicht geheim gehalten werden müssen und ist ggf. zwischen Eigentümer und Nutzer abgestimmt. Im Wesentlichen kommen Summen von Zeiten und Integrale von Verbräuchen und Belastungen zum Einsatz.

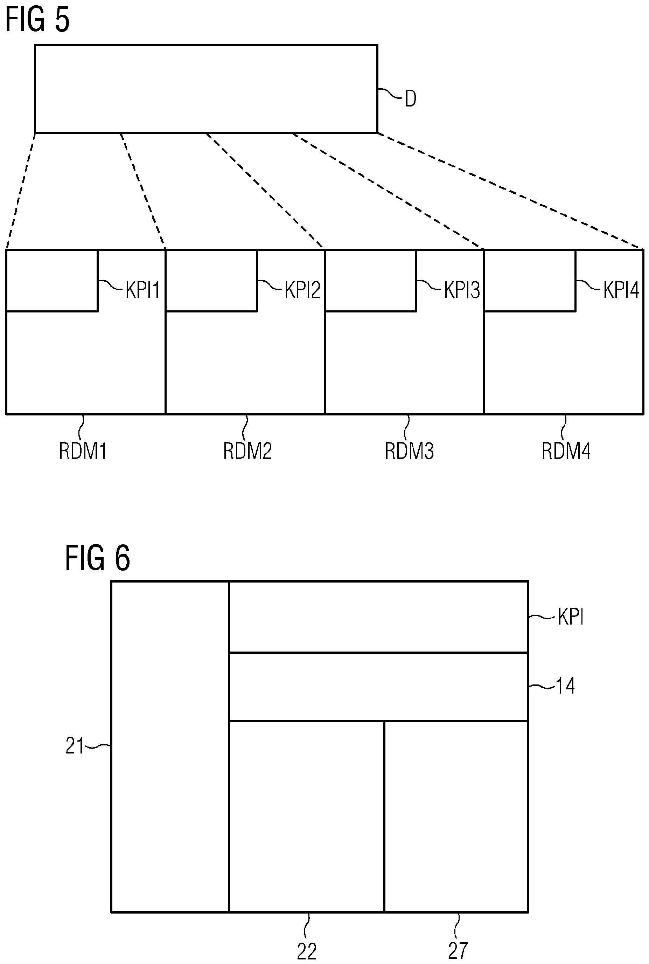

Bevor die Daten an den Besitzer übergeben werden, wird ein sogenannter Schlüsselindex (k-index) 14 als Parameter an Gerät 1 übergeben und damit ein Schlüssel erzeugt und an das Gerät 2 zurück gesendet 15 (KEYk-index). Das ganze Telegramm welches in Figur 6 dargestellt ist, besteht dann aus den mit den symmetrisch verschlüsselten Messdaten 27, dem unverschlüsseltem KPI und dem Index des verwendeten symmetrischen Schlüssels, 14. Das Telegramm wird noch signiert, 21 und an den Besitzer gesendet. Der Schlüssel wird nach der Benutzung sofort gelöscht, da er nicht mehr benötigt wird und unter Zuhilfenahme des Gerätes 1 bei Kenntnis des Schlüsselindexes jederzeit wieder erzeugt werden kann.

Abhängig vom Einsatzfall kann in einer vorteilhaften Ausführungsform der Erfindung im Gerät 2 eingestellt werden, wie oft die Schlüssel gewechselt werden, z. B. einmal pro Tag, einmal pro Arbeitsschicht oder einmal pro Stunde.

Je nach Häufigkeit der Schlüsselgeneration (Woche / Tag / Schicht / Stunde) kann sehr fein granular eingestellt werden, wieviel Information mit einem Schlüssel geschützt wird und damit auch, wieviel Information durch Übergabe eines einzelnen Schlüssels freigegeben wird.

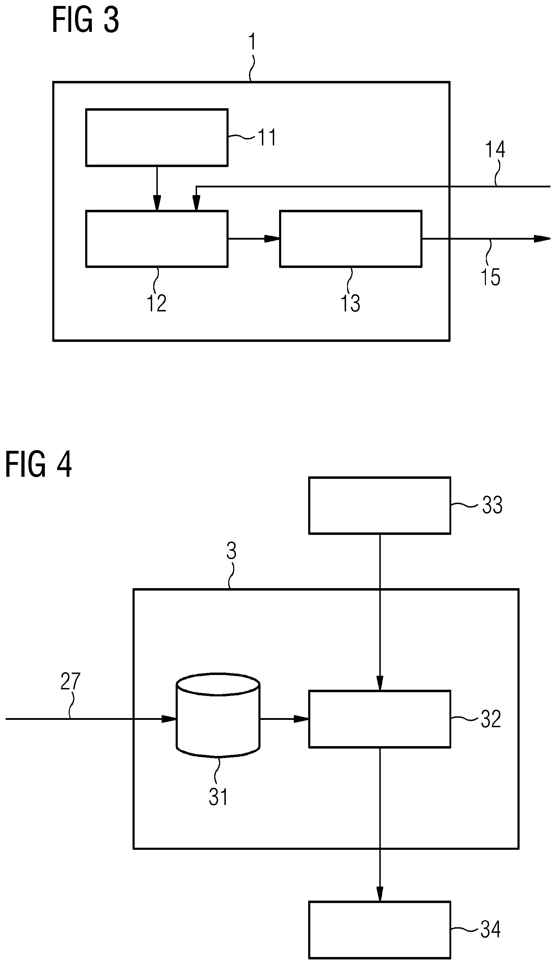

Figur 3 zeigt die Funktionsweise von Gerät 1, einem Schlüsselgenerator, der mit Hilfe eines Startwertes 11 und eines Pseudozufallszahlengenerators (pseudo random number generator, PRNG) 12 eine Reihe von symmetrischen Schlüsseln erzeugt. Ein Entwurf als physisches Gerät (USB-Dongle, Chip oder PLC-Modul) ist dabei einer reinen Softwareimplementierung vorzuziehen, da die Sicherheit eines PRNG in der Geheimhaltung des Startwerts liegt. Dies ist mit einem physischen Gerät besser zu erreichen.

Die Verwendung eines guten Pseudozufallszahlengenerators PRNG 12 garantiert einerseits, dass auch aus vielen bekannten Schlüsseln nicht auf weitere oder vorherige Schlüssel geschlossen werden kann, andererseits kann mit Wissen des Startwertes oder Besitz des Geräts auch nachträglich jeder benötigte Schlüssel 15 bestimmt werden, der zu einem gewissen Zeitpunkt gültig war. Dies ist erforderlich, wenn beispielsweise eine Abrechnung, welche in der Vergangenheit liegt, nachvollzogen werden soll und dafür die konkreten Messdaten 27 zu einem bestimmten Zeitpunkt wieder rekonstruiert werden müssen.

Als Generierungsfunktion 13 kann beispielsweise eine hashing Funktion verwendet werden. Der Block 13 vermeidet, dass die generierten Zufallsbits im Gerät 2 bekannt werden, was einen Rückschluss auf den internen Startwert des Geräts 1 zulässt. Es können außerdem weitere Daten in die Schlüsselgenerierung einfließen wie Seriennummern (von Gerät 2) oder Zeitstempel. Es ist auch ratsam, dass das Gerät 1 die Frequenz, mit der Schlüsselanforderungen beantwortet werden begrenzt, um einem Brute-Force-Angriff, der eine große Anzahl von Schlüsseln ausliest, zu begegnen.

Die Ausführung als Gerät (z.B. USB-Dongle, FPGA-Chip oder PLC-Baugruppe) ist ein Sicherheitsmerkmal, mit dem der Startwert des PRNG geschützt wird. Idealerweise sollte das Gerät eine Möglichkeit bieten, den Startwert zu initialisieren, aber explizit keine Funktion anbieten, den Startwert auszugeben.

Die Initialisierung des Startwertes kann vom Nutzer vorgenommen werden, ein Wissen unberechtigter über die generierten Schlüssel ist damit absolut ausgeschlossen.

Statt eines Gerätes 1 zur Schlüsselgeneration kann auch eine reine Software-Implementierung in Gerät 2 verwendet werden, diese ist allerdings weniger sicher, da diese den Startwert des Zufallszahlengenerators PRNG nicht so effektiv schützen kann.

Gerät 3 ist schematisch in Figur 4 dargestellt, es arbeitet als Abrechnungssystem. Dabei handelt es sich um ein Datenbanksystem, das alle in der oben beschriebenen Weise erstellten Telegramme speichert, 31, und eine Rechnungslegung 32 erlaubt. Dazu werden die Nutzungskennzahlen, welche von Gerät 2 in der beschriebenen Form gemäß Figur 6, empfangen werden, in geeigneter Weise (also beispielsweise gemäß dem zwischen Hersteller H und Kunden K geschlossenen Nutzungsvertrag) in einen Rechnung 34 verwandelt. Verwendete Parameter 33 können bei der Erstellung sein: Grundgebühren, Nutzungsgebühren, Mehr- oder Mindermengenrabatte, Preisnachlässe. Die genauen Faktoren sind jedoch Teil der geschäftlichen Beziehung zwischen Besitzer und Nutzer.

Sollte es (beispielsweise zu einem späteren Zeitpunkt) zu Differenzen oder Anzweiflung der Nutzungskennzahlen kommen (durch Besitzer oder Nutzer), so kann die genaue Entstehung der Rechnung kontrolliert werden.

Die Rechnung 34 ist von diesen drei Faktoren abhängig:
1. Den Messdaten 27,
2. Der Transformation der Messdaten in die Kennzahlen 23 und
3. Der Transformation der Kennzahlen 23 in Rechnungsbeträge 32.

Da die Messdaten 27 und die Transformation der Messdaten in die Kennzahlen 23 zwischen den Beteiligten abgestimmt sind, sind zur Nachvollziehbarkeit der Rechnungsbeträge nur noch die Messdaten 27 erforderlich. Dazu fordert der Besitzer vom Nutzer den oder die benötigten Schlüssel 15 (KEY_{k-index}) dafür an, welches nicht Teil des ursprünglichen Telegramms und in der Datenbank hinterlegt sind. Diese erhält der Nutzer aus dem Gerät 1 durch Eingabe der Schlüsselindexnummern k-index. Angefordert wird der Schlüssel Key_{k_index} (Schlüssel mit der Numemr k_index. Im ursprünglichen Telegramm und der Datenbank ist der k_index (die Schlüsselnummer) enthalten, aber nicht der Schlüssel selbst. Der Nachweis der Richtigkeit erfolgt durch Überprüfung des KPIs indem die Messwerte damit entschlüsselt und das KPIs nachgerechnet wird.

Als Basis für einen Pseudozufallszahlengenerator PRNG kann ein "Lineares Feedback Shift Register" genutzt werden. Hier können mit einem Polynom vom Grad n (d. h. n+1 Bit Zustand) Zyklen der Länge 2n-1 erzeugt werden. http://courses.cse.tamu.edu/walker/csce680/lfsr_table.pdf

Ein Polynom vom Grad 63 erzeugt dann also 2⁶³-1 Zufallsbits. Nimmt man davon jeweils 1024 (= 2¹⁰) Bit als Input für die Schlüsselgeneration,
so kann man damit 2^{(63 -10)}-1 Schlüssel erzeugen, bevor sich die Abfolge der Zufallszahlen wiederholt.

Ein hypothetischer Wechsel des Schlüssels jede Minute erfordert 60^{∗}24^{∗}365 = 525600 Schlüssel im Jahr (nach oben abschätzbar durch 2¹⁹=524288) .

Damit würde der Zufallsgenerator keine Wiederholungen in 2(⁶³⁻¹⁰⁻¹⁹⁾1 = 2³⁴ Jahren erzeugen.

Entsprechende Berechnungen können für andere Schlüssellängen oder Wechselintervalle erfolgen, um die Menge der generierbaren Schlüssel abzuschätzen.

Die Messwerte werden so mit einer Vielzahl unterschiedlicher Schlüssel verschlüsselt; der Schlüsselraum ist selbst bei minütlichem Wechsel mehr als ausreichend groß.

Wenn man zur Pseudozufallszahlengenerierung PRNG eine Berechnung nach Blum-Blum-Shub Verfahren wählt, kann man viele Iterationsschritte zugleich berechnen, was insbesondere bei großen Indizes einen enormen Zeitvorteil bei der Erzeugung der Zufallszahlen und damit der Schlüssel bedeutet. https://de.wikipedia.org/wiki/Blum-Blum-Shub-Generator

Ein einfaches linear rückgekoppeltes Schieberegister (engl. linear feedback shift register, kurz LFSR) müsste dagegen mit dem Startwert initialisiert werden und alle Iterationen bis zum gewünschten Index durchführen (1024 Schritte pro Index). https://de.wikipedia.org/wiki/Linear_rückgekoppeltes_Schieber egister

Das Gesamt-System bietet eine integrierte und automatische Schlüsselgeneration. Es ist ein Vorteil der Erfindung, dass abgesehen vom oben erwähnten Startwert kein Kryptografisches Material gespeichert oder über unsichere Kanäle übertragen werden muss. Schlüssel müssen außerdem nicht aufbewahrt werden und können so nicht in falsche Hände geraten.

Je nach Häufigkeit der Schlüsselgeneration (Woche / Tag / Schicht / Stunde) kann sehr fein granular eingestellt werden, wieviel Information mit einem Schlüssel geschützt wird und damit auch, wieviel Information durch Übergabe eines einzelnen Schlüssels freigegeben wird.

## Patentansprüche

1. Vorrichtung (2) zur zugriffsbeschränkten Bereitstellung einer zeitabhängigen Benutzungs-Kennzahl (KPI) für ein Gerät (M1, M2, M3) zur weiteren Verwendung eines ersten Nutzers (H1, H2), insbesondere als nutzungsabhängige Rechnungsgrundlage für einen zweiten Nutzer (K),
- mit einem Rechner (23) zur Ermittlung der Benutzungs-Kennzahl (KPI) aus einem ermittelten, nutzungsabhängigen, zeitabhängigen Messwert (27) zu dem Gerät (M1, M2, M3), wobei der Algorithmus zur Berechnung dem ersten Nutzer (H1, H2) und den zweiten Nutzer (K) bekannt sind,
- mit einem Schlüsselgenerator zur Erzeugung eines Schlüsselindex (14), und Generierung eines symmetrischen Schlüssels (15) auf Basis des Schlüsselindex (14), zur Verschlüsselung (22) des zumindest einen Messwertes (27) mittels des symmetrischen Schlüssels (15) und
- Übertragung der zeitabhängigen Benutzungs-Kennzahl (KPI) zusammen mit dem verschlüsselten Messwert und dem Schlüsselindex (14) in einem Datenpaket (20).

2. Vorrichtung (2) gemäß Patentanspruch 1, **dadurch gekennzeichnet, dass**
der symmetrische Schlüssel (15) nach Initiierung durch den Schlüsselindex (14) in zeitlichen Abständen neu generiert wird und einstellbar ist, in welchen Zeitabständen der symmetrische Schlüssel gewechselt wird.

3. Vorrichtung (2) gemäß Patentanspruch 1 oder 2, daudurch gekennzeichnet, dass
die Vorrichtung in eine Automatisierungskomponente, insbesondere eine Werkzeugmaschine, integriert ist.

4. System, bestehend aus
einer Vorrichtung (2) gemäß Patentanspruch 1 oder 2, und einer Vorrichtung (1) zur Erzeugung einer zum Empfang des Schlüsselindex (14), welches mit Hilfe eines Startwertes (11) und eines Pseudozufallszahlengenerators (12) eine Reihe von symmetrischen Schlüsseln erzeugt.

5. System gemäß Patentanspruch 3, **dadurch gekennzeichnet, dass**
die Vorrichtung (1) als physisches Gerät ausgestaltet ist.

6. System gemäß Patentanspruch 4 oder 5, **dadurch gekennzeichnet, dass**
der Pseudozufallszahlengenerator (12) als Lineares Feedback Shift Register ausgestaltet ist.

7. System gemäß einem der Patentansprüche 4 oder 5, **dadurch gekennzeichnet, dass**
der Pseudozufallszahlengenerators (12) eine Berechnung nach Blum-Blum-Shub durchführt.

8. System gemäß einem der Patentansprüche 4 bis 7, **dadurch gekennzeichnet, dass**
durch die Vorrichtung (1) die Frequenz beschränkt wird, mit der symmetrische Schlüssel anfordert werden kann.

9. Verfahren zur zugriffsbeschränkten Bereitstellung einer zeitabhängigen Benutzungs-Kennzahl (KPI) für ein Gerät (M1, M2, M3) zur weiteren Verwendung eines ersten Nutzers (H1, H2), insbesondere als nutzungsabhängige Rechnungsgrundlage für einen zweiten Nutzer (K), mit den Schritten
- Ermittlung von zumindest einem nutzungsabhängigen, zeitabhängigen Messwert (27) zu dem Gerät (M1, M2, M3),
- Berechnung der Benutzungs-Kennzahl (23) aus dem ermittelten zumindest einen Messwert (27), wobei der Algorithmus zur Berechnung dem ersten Nutzer (H1, H2) und dem zweiten Nutzer (K) bekannt sind,
- Erzeugen eines Schlüsselindex (14), und Generierung eines symmetrischen Schlüssels (15) auf Basis des Schlüsselindex (14),
- Verschlüsselung (22) des zumindest einen Messwerts (27) mittels des symmetrischen Schlüssels (15) und
- Übertragung der zeitabhängigen Benutzungs-Kennzahl (KPI) zusammen mit dem zumindest einen verschlüsselten Messwert und dem Schlüsselindex (14) in einem Datenpaket (20).

10. Verfahren gemäß Patentanspruch 9
**dadurch gekennzeichnet, dass**
die Übertragung des Datenpakets (20) weiterhin eine Signatur des Absenders (21) enthält.

11. Verfahren gemäß Patentanspruch 9 oder 10,
**dadurch gekennzeichnet, dass**
der Schlüsselindex (14) in vorbekannten, gleichmäßigen Zeitabständen gewechselt wird.

12. Verfahren gemäß einem der Patentanspruch 9 bis 11,
**dadurch gekennzeichnet, dass**
weitere Daten in die Schlüsselgenerierung einfließen wie Seriennummern (von Gerät 2) oder Zeitstempel.

13. Verfahren gemäß einem der Patentanspruch 9 bis 12,
**dadurch gekennzeichnet, dass**
die in dem Datenpaket (20) übertragene zeitabhängige Kennzahl (KPI) zusammen mit dem verschlüsselten Messwert und dem Schlüsselindex (14) gesondert gespeichert wird (31).

14. Verfahren gemäß Patentanspruch 13,
**dadurch gekennzeichnet, dass**
aus der übertragenen unverschlüsselten zeitabhängigen Kennzahl (KPI) mit weiteren nutzerabhängigen (H1, H2, K) Informationen (33) die verknüpft wird (34).

15. Verfahren gemäß einem der Patentansprüche 9 bis 14,
**dadurch gekennzeichnet, dass**
der symmetrischen Schlüssel (15) nach einmaliger Verwendung gelöscht wird.

16. Verfahren gemäß einem der Patentansprüche 9 bis 15,
**dadurch gekennzeichnet, dass**
es sich bei dem Gerät (2) um eine Autmatisierungskomponente, insbesondere eine Werkzeugmaschine, handelt und bei dem nutzungsabhängigen, zeitabhängigen Messwert und zumindest einen von den folgenden Messwerten pro Zeiteinheit aus der Werkzeugmaschine handelt
Produktionszeit
Produktionsdauer,
Bearbeitungsgeschwindigkeit,
Bearbeitungs-Intensität,
Angewendete Kraft oder
Anzahl produzierter Teile.
